# EUROPEAN PATENT APPLICATION

(11) **EP 4 737 520 A1**
(43) Date of publication of application: **06.05.2026**
(21) Application number: 24831767.9
(22) Date of filing: 18.06.2024
(51) Int. Cl.: C08L 101/12, B32B 27/18, C08K 5/053, C08L 25/18, C08L 39/06, C08L 65/00, H01G 9/00, H01G 9/028

(54) **CONDUCTIVE COMPOSITE DISPERSION LIQUID AND METHOD FOR PRODUCING SAME, CAPACITOR AND METHOD FOR PRODUCING SAME, AND CONDUCTIVE MULTILAYER BODY AND METHOD FOR PRODUCING SAME**

(30) Priority: 30.06.2023 JP 2023108090
(71) Applicant: Shin-Etsu Polymer Co., Ltd., Tokyo 100-0004 (JP)
(72) Inventor: ICHIKAWA, Muneki, Saitama-shi, Saitama 331-0811 (JP)
(74) Representative: TBK
(86) International application number: PCT/JP2024/022060
(87) International publication number: WO 2025/004905

(57) **Abstract**

A conductive composite dispersion liquid contains a conductive composite containing a π-conjugated conductive polymer and a polyanion, water, a sugar alcohol having 4 to 7 carbon atoms and 3 to 7 hydroxy groups in a molecule, and polyvinylpyrrolidone, and the conductive composite dispersion liquid has a viscosity at 25°C of less than 50 mPa·s.

## Description

### Field

The present invention relates to a conductive composite dispersion liquid containing a π-conjugated conductive polymer and a polyanion, a capacitor, and a conductive multilayer body. The present application claims priority based on Japanese Patent Application No. 2023-108090, filed June 30, 2023, the content of which is incorporated herein by reference.

### Background

A polyanion having an anionic group is doped into a π-conjugated conductive polymer having a π-conjugated main chain to form a conductive composite, resulting in dispersibility in water. A method for producing a capacitor by applying a coating material in which a conductive composite dispersion liquid containing a conductive composite is used as a material to a dielectric layer disposed on the surface of an anode formed from a valve metal, drying the coating material to form a solid electrolyte layer, and arranging a cathode so as to face the solid electrolyte layer is disclosed (e.g., Patent Literature 1). In this disclosure, the coating material that contains a specific unsaturated aliphatic alcohol compound improves the performance of the capacitor.

### Citation List

### Patent Literature

Patent Literature 1: Japanese Patent Application Laid-open No. 2022-071400

### Summary

### Technical Problem

In order to penetrate a porous structure of a dielectric layer, a conductive composite dispersion liquid used in production of a capacitor is required to have a low viscosity. Meanwhile, the conductive composite dispersion liquid having penetrated is required to increase in viscosity as drying and solidification progress and to stably remain in the porous structure. In order to stably retain the conductive composite dispersion liquid in the porous structure, adding a thickener is considered, but the thickener increases the viscosity of the conductive composite dispersion liquid. Therefore, a conductive composite dispersion liquid that has a low viscosity sufficiently to penetrate the porous structure and increases in viscosity during drying after penetration has been required.

The present invention provides a conductive composite dispersion liquid suitable for production of a high-performance capacitor.

### Solution to Problem

[1] A conductive composite dispersion liquid containing a conductive composite containing a π-conjugated conductive polymer and a polyanion, water, a sugar alcohol having 4 to 7 carbon atoms and 3 to 7 hydroxy groups in a molecule, and polyvinylpyrrolidone, the conductive composite dispersion liquid having a viscosity at 25°C of less than 50 mPa·s.
[2] The conductive composite dispersion liquid according to [1], wherein a content of the polyvinylpyrrolidone is 0.01 parts by mass or more and less than 0.30 parts by mass with respect to a total of 100 parts by mass of the conductive composite and the water.
[3] The conductive composite dispersion liquid according to [1] or [2], wherein a content of the conductive composite is 0.1 parts by mass or more and 3.0 parts by mass or less with respect to a total of 100 parts by mass of the conductive composite and the water.
[4] The conductive composite dispersion liquid according to any one of [1] to [3], wherein a content of the water is 70 mass% or more and 99 mass% or less with respect to a whole mass of the conductive composite dispersion liquid.
[5] The conductive composite dispersion liquid according to any one of [1] to [4], wherein the sugar alcohol contains at least one of sorbitol, mannitol, erythritol, and pentaerythritol.
[6] The conductive composite dispersion liquid according to any one of [1] to [5], further containing an organic solvent having a boiling point at 1 atm of 150°C or more.
[7] The conductive composite dispersion liquid according to any one of [1] to [6], further containing a neutralizer.
[8] The conductive composite dispersion liquid according to any one of [1] to [7], wherein the π-conjugated conductive polymer is poly(3,4-ethylenedioxythiophene) or the polyanion is polystyrenesulfonic acid, or the π-conjugated conductive polymer is poly(3,4-ethylenedioxythiophene) and the polyanion is polystyrenesulfonic acid.
[9] A capacitor including an anode formed from a porous body of a valve metal, a dielectric layer formed from an oxide of the valve metal, a cathode formed from a conductive material on a side opposite to the anode, and a solid electrolyte layer formed between the dielectric layer and the cathode, wherein the solid electrolyte layer is a cured product of the conductive composite dispersion liquid according to any one of [1] to [8].
[10] A conductive multilayer body including a substrate and a conductive layer formed on a surface of at least a portion of the substrate, wherein the conductive layer is a cured product of the conductive composite dispersion liquid according to any one of [1] to [8].
[11] A method for producing a conductive composite dispersion liquid, the method including a step of mixing a conductive composite containing a π-conjugated conductive polymer and a polyanion, a dispersion medium, and a sugar alcohol having 4 to 7 carbon atoms and 3 to 7 hydroxy groups in a molecule to obtain a conductive composite dispersion liquid having a viscosity at 25°C of less than 50 mPa·s.
[12] The method for producing a conductive composite dispersion liquid according to [11], wherein a dispersion liquid in which the conductive composite is dispersed in the dispersion medium is obtained and condensed, and the sugar alcohol is mixed.
[13] A method for producing a capacitor, the method including a step of applying the conductive composite dispersion liquid according to any one of [1] to [8] to a surface of a dielectric layer formed on a surface of an anode formed from a porous body of a valve metal and drying the conductive composite dispersion liquid to form a solid electrolyte.
[14] A method for producing a conductive multilayer body, the method including a step of applying the conductive composite dispersion liquid according to any one of [1] to [8] to at least a surface of a substrate and drying the conductive composite dispersion liquid to form a conductive layer.

### Advantageous Effects of Invention

A conductive composite dispersion liquid of the present invention has a low viscosity sufficiently to penetrate a porous structure and increases in viscosity during drying after penetration, and hence the conductive composite dispersion liquid is suitable for production of a high-performance capacitor. This property is suitable for not only production of a capacitor but also production of a conductive multilayer body in which a conductive layer is layered on a substrate.

In a capacitor including a solid electrolyte layer formed from a cured product of the conductive composite dispersion liquid of the present invention, a conductive composite is stabilized due to polyvinylpyrrolidone coexisting in a solid electrolyte. Furthermore, the capacitor has low equivalent series resistance (ESR) and high performance.

In a conductive multilayer body including a conductive layer formed from the cured product of the conductive composite dispersion liquid of the present invention, the adhesion to a substrate is improved due to a polyvinylpyrrolidone coexisting in the conductive layer, and the conductive composite is stabilized.

It is conceivable that the present invention contributes to SDGs Goal 12 "Responsible consumption and production."

In the present description and claims, the lower limit value and the upper limit value of a numerical range represented by "to" are included in the numerical range. Brief Description of Drawing

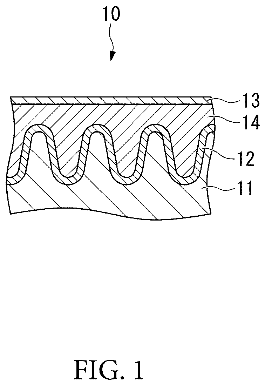

FIG. 1 is a cross-sectional view illustrating an embodiment of a capacitor.

### Description of Embodiments

### <<Conductive Composite Dispersion Liquid>>

A first aspect of the present invention is a conductive composite dispersion liquid containing a conductive composite containing a π-conjugated conductive polymer and a polyanion, water, a specific sugar alcohol, and polyvinylpyrrolidone, the conductive composite dispersion liquid having a viscosity at 25°C of less than 50 mPa·s.

### <Conductive Composite>

The conductive composite of the present aspect contains a π-conjugated conductive polymer and a polyanion. The polyanion in the conductive composite is doped into the π-conjugated conductive polymer to form the conductive composite having conductivity. Some anionic groups alone of the polyanion are doped into the π-conjugated conductive polymer, and the remaining anionic groups are not involved in doping. The remaining anionic groups are hydrophilic groups, and hence the conductive composite has water-dispersibility.

### (π-conjugated Conductive Polymer)

The π-conjugated conductive polymer has only to be an organic polymer having a π-conjugated main chain, and examples thereof include a polypyrrole-based conductive polymer, a polythiophene-based conductive polymer, a polyacetylene-based conductive polymer, a polyphenylene-based conductive polymer, a polyphenylenevinylene-based conductive polymer, a polyaniline-based conductive polymer, a polyacene-based conductive polymer, a polythiophenevinylene-based conductive polymer, and copolymers thereof. From the viewpoint of stability in air, a polypyrrole-based conductive polymer, polythiophenes, and a polyaniline-based conductive polymer are preferred, and from the viewpoint of transparency, a polythiophene-based conductive polymer is more preferred.

Examples of the polythiophene-based conductive polymer include polythiophene, poly(3-methylthiophene), poly(3-ethylthiophene), poly(3-propylthiophene), poly(3-butylthiophene), poly(3-hexylthiophene), poly(3-heptylthiophene), poly(3-octylthiophene), poly(3-decylthiophene), poly(3-dodecylthiophene), poly(3-octadecylthiophene), poly(3-bromothiophene), poly(3-chlorothiophene), poly(3-iodothiophene), poly(3-cyanothiophene), poly(3-phenylthiophene), poly(3,4-dimethylthiophene), poly(3,4-dibutylthiophene), poly(3-hydroxythiophene), poly(3-methoxythiophene), poly(3-ethoxythiophene), poly(3-butoxythiophene), poly(3-hexyloxythiophene), poly(3-heptyloxythiophene), poly(3-octyloxythiophene), poly(3-decyloxythiophene), poly(3-dodecyloxythiophene), poly(3-octadecyloxythiophene), poly(3,4-dihydroxythiophene), poly(3,4-dimethoxythiophene), poly(3,4-diethoxythiophene), poly(3,4-dipropoxythiophene), poly(3,4-dibutoxythiophene), poly(3,4-dihexyloxythiophene), poly(3,4-diheptyloxythiophene), poly(3,4-dioctyloxythiophene), poly(3,4-didecyloxythiophene), poly(3,4-didodecyloxythiophene), poly(3,4-ethylenedioxythiophene), poly(3,4-propylenedioxythiophene), poly(3,4-butylenedioxythiophene), poly(3-methyl-4-methoxythiophene), poly(3-methyl-4-ethoxythiophene), poly(3-carboxythiophene), poly(3-methyl-4-carboxythiophene), poly(3-methyl-4-carboxyethylthiophene), and poly(3-methyl-4-carboxybutylthiophene).

Examples of the polypyrrole-based conductive polymer include polypyrrole, poly(N-methylpyrrole), poly(3-methylpyrrole), poly(3-ethylpyrrole), poly(3-n-propylpyrrole), poly(3-butylpyrrole), poly(3-octylpyrrole), poly(3-decylpyrrole), poly(3-dodecylpyrrole), poly(3,4-dimethylpyrrole), poly(3,4-dibutylpyrrole), poly(3-carboxypyrrole), poly(3-methyl-4-carboxypyrrole), poly(3-methyl-4-carboxyethylpyrrole), poly(3-methyl-4-carboxybutylpyrrole), poly(3-hydroxypyrrole), poly(3-methoxypyrrole), poly(3-ethoxypyrrole), poly(3-butoxypyrrole), poly(3-hexyloxypyrrole), and poly(3-methyl-4-hexyloxypyrrole).

Examples of the polyaniline-based conductive polymer include polyaniline, poly(2-methylaniline), poly(3-isobutylaniline), poly(2-aniline sulfonic acid), and poly(3-aniline sulfonic acid).

Among the π-conjugated conductive polymers, poly(3,4-ethylenedioxythiophene) is particularly preferred since it has excellent conductivity, transparency, and heat resistance.

The conductive composite may contain one kind or two or more kinds of π-conjugated conductive polymers.

### (Polyanion)

The polyanion is a polymer having two or more monomer units having an anionic group in a molecule. The anionic group of this polyanion functions as a dopant for the **π-**conjugated conductive polymer and improves the conductivity of the π-conjugated conductive polymer.

The anionic group of the polyanion is preferably a sulfo group or a carboxy group.

Specific examples of such a polyanion include polymers having a sulfo group, such as polystyrenesulfonic acid, polyvinylsulfonic acid, polyallylsulfonic acid, a polyacrylic acid ester having a sulfo group, a polymethacrylic acid ester having a sulfo group (e.g., poly(4-sulfobutyl methacrylate), poly(sulfoethyl methacrylate), and polymethallyloxybenzenesulfonic acid), poly(2-acrylamide-2-methylpropanesulfonic acid), and polyisoprenesulfonic acid; and polymers having a carboxy group, such as polyvinylcarboxylic acid, polystyrenecarboxylic acid, polyallylcarboxylic acid, polyacrylic acid, polymethacrylic acid, poly(2-acrylamide-2-methylpropanecarboxylic acid), and polyisoprenecarboxylic acid. The polyanion may be a homopolymer obtained by polymerization of a single monomer or a copolymer obtained by polymerization of two or more kinds of monomers.

Among these polyanions, a polymer having a sulfo group is preferred, and polystyrenesulfonic acid is more preferred since higher conductivity can be achieved.

The weight-average molecular weight Mw of the polyanion is not particularly limited, and is, for example, preferably 10,000 to 1,000,000, more preferably 50,000 to 800,000, and still more preferably 100,000 to 600,000.

When the weight-average molecular weight Mw of the polyanion falls within the above-mentioned range, the viscosity of the conductive composite dispersion liquid of the present aspect is moderately reduced, and a capacitor having sufficiently low ESR can be easily produced.

The weight-average molecular weight Mw of the polyanion is an average molecular weight on a mass basis determined by measurement through gel filtration chromatography and calculation as Pullulan equivalent.

The content ratio of the polyanion in the conductive composite dispersion liquid of the present aspect is, for example, preferably in the range of 1 part by mass or more and 1,000 parts by mass or less, more preferably 10 parts by mass or more and 700 parts by mass or less, and still more preferably 100 parts by mass or more and 500 parts by mass or less, with respect to 100 parts by mass of the π-conjugated conductive polymer. When the content ratio of the polyanion is equal to or more than the lower limit value, a doping effect on the π-conjugated conductive polymer tends to be enhanced, and the conductivity is further increased. Meanwhile, when the content of the polyanion is equal to or less than the upper limit value, the content of the π-conjugated conductive polymer can be sufficient, and sufficient conductivity can be secured.

The content of the conductive composite in the conductive composite dispersion liquid of the present aspect is preferably 0.1 parts by mass or more and 3.0 parts by mass or less, more preferably 0.5 parts by mass or more and 2.5 parts by mass or less, still more preferably 1.0 part by mass or more and 2.3 parts by mass or less, and most preferably 1.3 parts by mass or more and 2.1 parts by mass or less, with respect to a total of 100 parts by mass of the conductive composite (a total of the π-conjugated conductive polymer and the polyanion) and water.

When the content is equal to or more than the lower limit value of the range, the conductivity of a cured product of the conductive composite dispersion liquid is further increased. When the content is equal to or less than the upper limit value of the range, the viscosity of the conductive composite dispersion liquid is easily reduced.

The content of the conductive composite (the content of the total of the π-conjugated conductive polymer and the polyanion) is, for example, preferably 0.1 mass% or more and 3.0 mass% or less, more preferably 0.5 mass% or more and 2.5 mass% or less, and still more preferably 1.0 mass% or more and 2.0 mass% or less, with respect to the whole mass of the conductive composite dispersion liquid of the present aspect.

When the content is equal to or more than the lower limit value of the range, the conductivity of a cured product of the conductive composite dispersion liquid is further increased. When the content is equal to or less than the upper limit value of the range, the viscosity of the conductive composite dispersion liquid is easily reduced.

### (Sugar Alcohol)

The conductive composite dispersion liquid of the present aspect contains a specific sugar alcohol. When the specific sugar alcohol is contained together with polyvinylpyrrolidone, the conductivity after curing can be improved to improve capacitor performance (to reduce ESR)

From the viewpoint of sufficiently achieving the above-mentioned effect, the sugar alcohol is preferably a sugar alcohol having 4 to 7 carbon atoms and 3 to 7 hydroxy groups in a molecule, and more preferably one or more selected from pentaerythritol, sorbitol, mannitol, and erythritol.

The content of the sugar alcohol in the conductive composite dispersion liquid of the present aspect is preferably 1.0 part by mass or more and 20.0 parts by mass or less, more preferably 3.0 parts by mass or more and 16.0 parts by mass or less, still more preferably 6.0 part by mass or more and 14.0 parts by mass or less, and most preferably 8.0 parts by mass or more and 12.0 parts by mass or less, with respect to a total of 100 parts by mass of the conductive composite (a total of the π-conjugated conductive polymer and the polyanion) and water.

When the content is equal to or more than the lower limit value of the range, the viscosity of the conductive composite dispersion liquid can be sufficiently reduced. When the content is equal to or less than the upper limit value of the range, an excess of sugar alcohol contained in the conductive composite dispersion liquid can be reduced to increase the conductivity of a cured product thereof.

The content of the sugar alcohol is, for example, preferably 0.1 mass% or more and 20 mass% or less, more preferably 1.0 mass% or more and 18.0 mass% or less, still more preferably 3.0 mass% or more and 15.0 mass% or less, and most preferably 6.0 mass% or more and 12.0 mass% or less, with respect to the whole mass of the conductive composite dispersion liquid of the present aspect.

When the content is equal to or more than the lower limit value of the range, the viscosity of the conductive composite dispersion liquid can be sufficiently reduced. When the content is equal to or less than the upper limit value of the range, an excess of sugar alcohol contained in the conductive composite dispersion liquid can be reduced to increase the conductivity of a cured product thereof.

### (Polyvinylpyrrolidone)

The conductive composite dispersion liquid of the present aspect contains polyvinylpyrrolidone (PVP). An increase in viscosity when the conductive composite dispersion liquid is dried is enhanced due to blended PVP, and the adhesion to a dielectric layer of a solid electrolyte layer formed by drying and solidification (similarly, the adhesion of a conductive layer to a substrate) can be improved.

From the viewpoint of further enhancing the above-mentioned effect, the K value of PVP in the present aspect is preferably 50 or more, more preferably 80 or more, and still more preferably 90 or more. The upper limit value of the K value is usually 200 or less, and preferably 160 or less.

The K value is generally known as a viscosity characteristic value correlating with the molecular weight, and is calculated by applying a relative viscosity (25°C) relative to water measured with a capillary vessel viscometer to the Fikentscher equation. The equation and a measurement method are defined in ISO 1628-1:1998(E).

The content of PVP in the conductive composite dispersion liquid of the present aspect is preferably 0.01 parts by mass or more and 0.30 parts by mass or less, more preferably 0.01 parts by mass or more and 0.20 parts by mass or less, and still more preferably 0.01 parts by mass or more and 0.10 parts by mass or less, with respect to a total of 100 parts by mass of the conductive composite (a total of the π-conjugated conductive polymer and the polyanion) and water.

When the content is equal to or more than the lower limit value of the range, the viscosity of the conductive composite dispersion liquid during drying can be increased to further increase the adhesion of a cured product to a substrate. When the content is equal to or less than the upper limit value of the range, an excess of PVP contained in the conductive composite dispersion liquid can be reduced to increase the conductivity of a cured product thereof.

The content of PVP is, for example, preferably 0.001 mass% or more and 0.50 mass% or less, more preferably 0.003 mass% or more and 0.35 mass% or less, and still more preferably 0.005 mass% or more and 0.20 mass% or less, with respect to the whole mass of the conductive composite dispersion liquid of the present aspect.

When the content is equal to or more than the lower limit value of the range, the viscosity of the conductive composite dispersion liquid during drying can be increased to further increase the adhesion of a cured product to a substrate. When the content is equal to or less than the upper limit value of the range, an excess of PVP contained in the conductive composite dispersion liquid can be reduced to increase the conductivity of a cured product thereof.

### (Dispersant Medium)

The conductive composite is hydrophilic, and hence a dispersion medium contained in the conductive composite dispersion liquid is preferably an aqueous dispersion medium including water. Moreover, a dispersion medium other than water may be contained. The dispersion medium other than water is not particularly limited as long as it does not significantly impair the dispersibility of the conductive composite. The conductive composite has an excess of anionic group derived from the polyanion and high dispersibility in water, and hence the dispersion medium other than water is preferably a water-soluble organic solvent. Here, the water-soluble organic solvent is an organic solvent having a solubility of 1 g or more in 100 g of water at 20°C, and examples thereof include an alcoholic solvent, a ketone-based solvent, and an ester-based solvent. One kind of water-soluble organic solvent or two or more kinds thereof may be contained as the dispersion medium. A water-insoluble organic solvent is an organic solvent having a solubility of less than 1 g.

The content of water is preferably 70 mass% or more, more preferably 80 mass% or more, and still more preferably 90 mass% or more, with respect to the whole mass of the conductive composite dispersion liquid. Moreover, it is preferably 99 mass% or less. When water is contained in an amount equal to or more than the lower limit value, the dispersibility of the conductive composite contained in the conductive composite dispersion liquid can be increased to reduce the viscosity, and the ESR of a capacitor having a solid electrolyte layer formed from the conductive composite dispersion liquid can be further reduced. Moreover, the conductivity of a conductive layer formed from the conductive composite dispersion liquid can be further increased.

### (Neutralizer)

The conductive composite dispersion liquid of the present aspect may further contain one or more kinds of neutralizers. When the polyanion has an acid group, the conductive composite dispersion liquid tends to be strongly acidic, but can be neutralized with the neutralizer. Examples of the neutralizer include a basic compound.

The basic compound functions as a Bronsted base that receives protons from an excess of anionic group of the polyanion. In order to serve this function, the solubility of the basic compound in water is preferably 0.001 g or more with respect to 100 g of water at 20°C. The upper limit value of the solubility is not particularly limited. However, even when the solubility is, for example, about 0.1 g, the basic compound can sufficiently achieve the function.

As the basic compound, an organic or inorganic basic compound containing nitrogen, a hydroxide of an alkali metal or a Group 2 metal, or a variety of carbonates, bicarbonates, or the like can be used. Examples thereof include a hydroxide of an alkali metal, a quaternary ammonium hydroxide or a salt thereof, ammonia, and an amine.

Specific examples of a hydroxide of an alkali metal include potassium hydroxide and sodium hydroxide.

Specific examples of carbonates or bicarbonates include ammonium bicarbonate, ammonium carbonate, potassium bicarbonate, potassium carbonate, sodium bicarbonate, and sodium carbonate.

Specific examples of a quaternary ammonium hydroxide or a salt thereof include tetramethylammonium hydroxide, tetraethylammonium hydroxide, and tetrabutylammonium hydroxide.

Examples of an amine include an aliphatic tertiary amine and a nitrogen-containing aromatic compound.

Examples of the aliphatic tertiary amine include triethanolamine, trimethylamine, triethylamine, tripropylamine, tributylamine, trihexylamine, trioctylamine, triphenylamine, tribenzylamine, and trinaphthylamine.

Examples of a nitrogen-containing aromatic compound (an aromatic compound in which at least one nitrogen atom forms a ring structure) include pyrrole, indole, imidazole, 2-methylimidazole, 2-propylimidazole, N-methylimidazole, N-propylimidazole, N-butylimidazole, 1-(2-hydroxyethyl)imidazole, 2-ethyl-4-methylimidazole, 1,2-dimethylimidazole, 1-benzyl-2-methylimidazole, 1-cyanoethyl-2-methylimidazole, 1-cyanoethyl-2-ethyl-4-methylimidazole, 2-phenyl-4,5-dihydroxymethylimidazole, 1-acetylimidazole, 2-aminobenzimidazole, 2-amino-1-methylbenzimidazole, 2-hydroxybenzimidazole, 2-(2-pyridyl)benzimidazole, pyridine, pyrimidine, pyrazine, and derivatives, such as an alkyl substitution product (e.g., a substitution product obtained by using an alkyl group having 1 to 4 carbon atoms, such as a methyl group, an ethyl group, a propyl group, or a butyl group), a halogen substitution product (e.g., a substitution product obtained by using a halogen group, such as a fluorine group, a chlorine group, or a bromine group), and a nitrile substitution product thereof.

Among these, a nitrogen-containing aromatic compound is preferred, and imidazole is more preferred.

The content of the basic compound in the conductive composite dispersion liquid is, for example, preferably 1 part by mass or more and 100 parts by mass or less, more preferably 5 parts by mass or more and 60 parts by mass or less, and still more preferably 10 parts by mass or more and 30 parts by mass or less, with respect to 100 parts by mass of the conductive composite (a total of the π-conjugated conductive polymer and the polyanion). When the content falls within the above-mentioned suitable range, the acidity of the conductive composite dispersion liquid can be reduced to reduce the erosion of a substrate, and the ESR of a capacitor can be further reduced.

The content of the basic compound in the conductive composite dispersion liquid is preferably a content in which the pH of the conductive composite dispersion liquid (25°C) is 2.0 to 8.0, more preferably a content in which the pH of the conductive composite dispersion liquid (25°C) is 2.0 to 5.0, and still more preferably a content in which the pH of the conductive composite dispersion liquid (25°C) is 2.0 to 3.0.

When the content falls within the above-mentioned suitable range, the ESR of the capacitor can be further reduced.

### (High-boiling Point Solvent)

The conductive composite dispersion liquid of the present aspect may further contain one or more kinds of organic solvents having a boiling point at 1 atm (101,325 Pa) of 150°C or more (high-boiling point solvent). The boiling point is preferably 250°C or less. Due to the contained high-boiling point solvent, effects, such as an improvement in conductivity of a cured product of the conductive composite dispersion liquid, are obtained.

Examples of the high-boiling point solvent include a water-soluble organic solvent and a water-insoluble organic solvent. Here, the definitions of the water-soluble organic solvent and the water-insoluble organic solvent are the same as described above.

Examples of the water-soluble organic solvent having a high boiling point include an alcoholic solvent, an ether-based solvent, a ketone-based solvent, a nitrogen atom-containing solvent, and a sulfur atom-containing solvent.

Examples of the alcoholic solvent include polyhydric alcohols, such as ethylene glycol (boiling point: 198°C), 1,2-propanediol (alias name: propylene glycol, boiling point: 188°C), 1,3-propanediol (boiling point: 214°C), 1,2-butanediol (boiling point: 194°C), 1,3-butanediol (boiling point: 207°C), 1,4-butanediol (boiling point: 228°C), dipropylene glycol (boiling point: 232°C, a mixture of isomers), and diethylene glycol (boiling point: 245°C).

Examples of the ether-based solvent include diethylene glycol dimethyl ether (boiling point: 162°C), and diethylene glycol diethyl ether (boiling point: 188°C).

Examples of the ketone-based solvent include methyl amyl ketone (boiling point: 151°C) and diacetone alcohol (boiling point: 168°C).

Examples of the nitrogen atom-containing solvent include N-methylpyrolidone (boiling point: 202°C), N-methylacetamide (boiling point: 206°C), dimethylacetamide (boiling point: 165°C), and N,N-dimethyl formamide (boiling point: 153°C).

Examples of the sulfur atom-containing solvent include dimethylsulfoxide (boiling point: 189°C).

Examples of the water-insoluble organic solvent having a high boiling point include a hydrocarbon-based solvent. Examples of the hydrocarbon-based solvent include an aliphatic hydrocarbon-based solvent and an aromatic hydrocarbon-based solvent.

Examples of the aliphatic hydrocarbon-based solvent include nonane (boiling point: 151°C), decane (boiling point: 174°C), and dodecane (boiling point: 216°C).

Examples of the aromatic hydrocarbon-based solvent include propylbenzene (boiling point: 159°C) and isopropylbenzene (boiling point: 152°C).

Among the examples, the alcoholic solvent having a high boiling point is preferred since a conductivity-improving effect is further enhanced.

Of the alcoholic solvent having a high boiling point, ethylene glycol (boiling point: 198°C), 1,2-propanediol (boiling point: 188°C), 1,3-propanediol (boiling point: 214°C), diethylene glycol (boiling point: 245°C), and dimethyl sulfoxide (boiling point: 189°C) are preferred since the solvents have an excellent conductivity-improving effect.

The content of the high-boiling point solvent in the conductive composite dispersion liquid is, for example, preferably 10 parts by mass or more and 2,000 parts by mass or less, more preferably 100 parts by mass or more and 1,000 parts by mass or less, and still more preferably 400 parts by mass or more and 800 parts by mass or less, with respect to 100 parts by mass of the conductive composite (a total of the π-conjugated conductive polymer and the polyanion).

When the content falls within the above-mentioned range, the ESR of the capacitor having a solid electrolyte layer formed from the conductive composite dispersion liquid can be further reduced. Moreover, the conductivity of a conductive layer formed from the conductive composite dispersion liquid can be further increased.

The content of the high-boiling point solvent is, for example, preferably 0.1 mass% or more and 20 mass% or less, more preferably 1.0 mass% or more and 18.0 mass% or less, still more preferably 3.0 mass% or more and 15.0 mass% or less, and most preferably 6.0 mass% or more and 12.0 mass% or less, with respect to the whole mass of the conductive polymer-containing liquid of the present aspect.

When the content is equal to or more than the lower limit value of the range, the ESR and the conductivity can be further improved. When the content is equal to or less than the upper limit value of the range, an increase in viscosity of the conductive composite dispersion liquid can be suppressed.

### (Optional Additive)

The conductive composite dispersion liquid may contain an optional additive. The content ratio of the optional additive is appropriately determined according to the kind of the additive, but may be, for example, 1 to 1,000 parts by mass with respect to a total of 100 parts by mass of the π-conjugated conductive polymer and the polyanion. Here, the optional additive is a compound other than the basic compound, the high-boiling point solvent, the sugar alcohol, PVP, and the dispersion medium.

Examples of the optional additive include a surfactant, an inorganic conducting agent, a defoamer, a coupling agent, an antioxidant, and a ultraviolet absorber.

Examples of the surfactant include nonionic, anionic, and cationic surfactants. From the viewpoint of storage stability, a nonionic surfactant is preferred. Alternatively, a polymeric surfactant, such as polyvinyl alcohol, may be added.

Examples of the inorganic conducting agent include metal ions and conductive carbon. Metal ions can be produced by dissolving metal salts in water.

Examples of the defoamer include a silicone resin, polydimethylsiloxane, and silicone oil.

Examples of the coupling agent include silane coupling agents having a vinyl group, an amino group, or an epoxy group.

Examples of the antioxidant include a phenolic antioxidant, an amine-based antioxidant, a phosphorus-based antioxidant, a sulfur-based antioxidant, and saccharides.

Examples of the ultraviolet absorber include a benzotriazole-based ultraviolet absorber, a benzophenone-based ultraviolet absorber, a salicylate-based ultraviolet absorber, a cyanoacrylate-based ultraviolet absorber, an oxanilide-based ultraviolet absorber, a hindered amine-based ultraviolet absorber, and a benzoate-based ultraviolet absorber.

The viscosity at 25°C of the conductive composite dispersion liquid of the present aspect is desirably low, preferably 50 mPa·s or less, more preferably 45 mPa·s or less, and still more preferably 40 mPa·s or less. The lower limit value of the viscosity is not particularly limited, but is 1 mPa·s or more as reference.

At the time of measuring the viscosity, the conductive composite dispersion liquid contains the conductive composite, water, the sugar alcohol, and PVP, and may further contain the neutralizer and the high-boiling point solvent.

In the measurement of the viscosity, a tuning fork oscillation viscometer is used, and the viscosity is a value measured at 25°C in accordance with JIS Z8803:2011 (viscosity determination by oscillation viscometer).

### <<Method for Producing Conductive Composite Dispersion Liquid>>

Examples of a method for producing the conductive composite dispersion liquid of the first aspect of the present invention include a method for adding PVP, a sugar alcohol, and as required, a neutralizer and a high-boiling point solvent, to an aqueous dispersion liquid of a conductive composite.

The aqueous dispersion liquid of a conductive composite may be obtained by chemical oxidation polymerization of a monomer forming a π-conjugated conductive polymer in an aqueous solution of a polyanion through a publicly known method, or a commercially available aqueous dispersion liquid of a conductive composite may be used.

### <<Method for Producing Capacitor>>

A capacitor can be produced by a method for producing a capacitor including a step of applying the conductive composite dispersion liquid of the first aspect to the surface of a dielectric layer formed on the surface of an anode formed from a porous body of a valve metal and drying the conductive composite dispersion liquid to form a solid electrolyte layer.

The method for producing a capacitor preferably includes a step of oxidizing the surface of an anode formed from a porous body of a valve metal to form a dielectric layer (dielectric forming step), a step of arranging a cathode at a position facing the dielectric layer (cathode forming step), and a step of forming a solid electrolyte layer on at least a portion of the surface of the dielectric layer (film forming step). Hereinafter, the respective steps will be described with reference to FIG. 1.

### [Dielectric Forming Step]

In this step, the surface of an anode 11 formed from a porous body of a valve metal is oxidized to form a dielectric layer 12. A method for forming the dielectric layer 12 is not particularly limited, and examples thereof include a method in which the surface of the anode 11 is subjected to anodization in an electrolyte solution for chemical conversion treatment, such as an ammonium adipate aqueous solution, an ammonium borate aqueous solution, or an ammonium phosphate aqueous solution.

### [Cathode Forming Step]

In this step, a cathode 13 is arranged at a position facing the dielectric layer 12. A method for arranging the cathode 13 is not particularly limited, and examples thereof include a method for forming the cathode 13 using a conductive paste, such as carbon paste or silver paste, and a method for arranging a metal foil, such as aluminum foil, at the position facing the dielectric layer 12.

### [Film Forming Step]

In this step, the conductive composite dispersion liquid is applied to at least a portion of the surface of the dielectric layer 12 and then dried to form a solid electrolyte layer 14.

As a method for applying the conductive composite dispersion liquid, for example, dipping (dip coating), comma coating, reverse coating, lip coating, micro gravure coating, or the like can be applied. Among these, a method for dipping the anode 11 in the conductive composite dispersion liquid under reduced pressure is preferred. In the dipping method, the conductive composite dispersion liquid can be sufficiently applied to the inside of the porous structure of the surface of the dielectric layer 12. After the dipping, the laminate is taken out and subjected to next drying treatment.

Examples of a drying method include drying at room temperature, hot-air drying, and far infrared radiation drying. Among these, hot-air drying is preferred.

The drying temperature is, for example, preferably 100 to 180°C, and more preferably 120 to 150°C. The drying time is, for example, preferably 0.2 to 1 hour.

After the drying treatment, a capacitor has only to be assembled by an ordinary method.

The composition of a component contained in the solid electrolyte layer 14 is reflected by the composition of the applied conductive composite dispersion liquid.

The content of the sugar alcohol is, for example, preferably 100 parts by mass or more and 5,000 parts by mass or less, more preferably 200 parts by mass or more and 2,000 parts by mass or less, and still more preferably 300 parts by mass or more and 1,000 parts by mass or less, with respect to 100 parts by mass of the conductive composite (a total of the π-conjugated conductive polymer and the polyanion) in the solid electrolyte layer 14. When the content falls within the above-mentioned range, the ESR of the capacitor is reduced, and the heat resistance is sufficiently improved.

The content of PVP is, for example, preferably 0.01 parts by mass or more and 50 parts by mass or less, more preferably 0.10 parts by mass or more and 30 parts by mass or less, and still more preferably 0.30 parts by mass or more and 20 parts by mass or less, with respect to 100 parts by mass of the conductive composite (a total of the π-conjugated conductive polymer and the polyanion) in the solid electrolyte layer 14. When the content falls within the above-mentioned range, the ESR of the capacitor is reduced, and the heat resistance is sufficiently improved.

### <<Capacitor>>

The capacitor includes an anode formed from a porous body of a valve metal, a dielectric layer formed from an oxide of the valve metal, a cathode formed from a conductive material on a side opposite to the anode, and a solid electrolyte layer formed between the dielectric layer and the cathode, and the solid electrolyte layer is a cured product of the conductive composite dispersion liquid of the first aspect.

An example of an embodiment of the capacitor will be described with reference to FIG. 1. A capacitor 10 shown in FIG. 1 includes the anode 11 formed from a porous body of a valve metal, the dielectric layer 12 formed from an oxide of the valve metal, the solid electrolyte layer 14 formed on the surface of the dielectric layer 12, and the cathode 13 disposed on the outermost side. The cathode 13 is placed between the dielectric layer 12 and the solid electrolyte layer 14 and is disposed on the side opposite to the anode 11.

Examples of the valve metal forming the anode 11 include aluminum, tantalum, niobium, titanium, hafnium, zirconium, zinc, tungsten, bismuth, and antimony. Among these, aluminum, tantalum, and niobium are suitable.

Specific examples of the anode 11 include an aluminum foil that is etched to increase the surface area, followed by oxidation of the surface, and pellets obtained by oxidizing the surface of a sintered body of tantalum particles or niobium particles. Products thus treated become a porous body with a surface having unevenness.

The dielectric layer 12 in the present embodiment is a layer formed by oxidizing the surface of the anode 11, and for example, by anodizing the surface of the anode 11 of a metal body in an electrolyte solution, such as an ammonium adipate aqueous solution. Similarly to the anode 11, the dielectric layer 12 also has a surface having unevenness.

As the cathode 13 in the present embodiment, a conductive layer formed from a conductive paste or a metal layer formed from a conductive material, such as an aluminum foil, can be used.

The solid electrolyte layer 14 in the present embodiment is formed on the surface of the dielectric layer 12. The solid electrolyte layer 14 covers at least a portion of the surface of the dielectric layer 12, or may cover the whole surface of the dielectric layer 12.

The thickness of the solid electrolyte layer 14 may or may not be constant, and is, for example, 1 µm or more and 100 µm or less.

### [Electrolyte Solution]

The capacitor may contain an electrolyte solution to impregnate the solid electrolyte layer.

Examples of a solvent constituting the electrolyte solution include alcoholic solvents, such as ethylene glycol, diethylene glycol, propylene glycol, 1,4-butanediol, and glycerin; lactone-based solvents, such as γ-butyrolactone, γ-valerolactone, and δ-valerolactone; sulfone-based solvents, such as sulfolane, dimethyl sulfoxide, and dimethylsulfone; amide-based solvents, such as N-methylformamide, N,N-dimethylformamide, N-methylacetamide, and N-methylpyrrolidinone; nitrile-based solvents, such as acetonitrile and 3-methoxypropionitrile; and water.

Examples of an electrolyte constituting the electrolyte solution include electrolytes including as an anion component an organic acid, such as adipic acid, glutaric acid, succinic acid, benzoic acid, isophthalic acid, phthalic acid, terephthalic acid, maleic acid, toluic acid, enanthic acid, malonic acid, formic acid, decanedicarboxylic acid, such as 1,6-decanedicarboxylic acid or 5,6-decanedicarboxylic acid, octanedicarboxylic acid, such as 1,7-octanedicarboxylic acid, azelaic acid, or sebacic acid; or boric acid, a polyhydric alcohol complex compound of boric acid produced from boric acid and polyhydric alcohol; or an inorganic acid, such as phosphoric acid, carbonic acid, or silicic acid, and as a cation component, a primary amine (methylamine, ethylamine, propylamine, butylamine, or ethylenediamine), a secondary amine (dimethylamine, diethylamine, dipropylamine, methylethylamine, and diphenylamine), a tertiary amine (trimethylamine, triethylamine, tripropylamine, triphenylamine, or 1,8-diazabicyclo(5,4,0)-undecene-7), or tetraalkylammonium (tetramethylammonium, tetraethylammonium, tetrapropylammonium, tetrabutylammonium, methyltriethylammonium, or dimethyldiethylammonium).

The capacitor is not limited to the above-mentioned configuration, and may have a separator between the dielectric layer and the cathode. Examples of the capacitor having a separator between the dielectric layer and the cathode include a wound type capacitor.

Examples of the separator include sheets (including a nonwoven fabric) formed from cellulose, polyvinyl alcohol, polyester, polyethylene, polystyrene, polypropylene, polyimide, polyamide, and polyvinylidene fluoride, and a nonwoven fabric formed from glass fibers. The density of the separator is, for example, 0.1 g/cm³ or more and 1.0 g/cm³ or less.

When the separator is provided, a method in which the separator is impregnated with carbon paste or silver paste to form a cathode can also be applied.

### <<Method for Producing Conductive Multilayer Body>>

A conductive multilayer body can be produced by a production method including a step of applying the conductive composite dispersion liquid of the first aspect of the present invention to a surface of at least a portion of a substrate to form a conductive layer.

As a method for applying the conductive composite dispersion liquid to any surface of a substrate (coating), for example, a method using a coater, such as a gravure coater, a roll coater, a curtain flow coater, a spin coater, a bar coater, a reverse coater, a kiss coater, a fountain coater, a rod coater, an air doctor coater, a knife coater, a blade coater, a cast coater, or a screen coater, a method using an atomizer of air spray, air-less spray, or rotor dampening, a dipping method, such as dipping, or the like can be applied.

The application amount of the conductive composite dispersion liquid to the substrate is not particularly limited, but, for example, the application amount in terms of a nonvolatile component preferably falls within the range of 0.01 to 10.0 g/m².

A coating film formed from the conductive composite dispersion liquid applied to the substrate is dried to remove at least a portion of the dispersion medium and then cured to form the conductive layer.

Examples of a method for drying the coating film include drying under heating and vacuum-drying. As drying under heating, for example, a method, such as hot-air heating or infrared light heating, can be employed.

When drying under heating is applied, the heating temperature is appropriately set according to the dispersion medium to be used, and usually falls within the range of 50°C or more and 200°C or less. Here, the heating temperature is a setting temperature of a dryer. A suitable drying temperature in the range of the heating temperature is preferably 0.5 minutes or more and 30 minutes or less, and more preferably 1 minute or more and 15 minutes or less.

### <<Conductive Multilayer Body>>

The conductive multilayer body includes a substrate and a conductive layer formed on a surface of at least a portion of the substrate, and the conductive layer contains a cured product of the conductive composite dispersion liquid of the first aspect.

### [Conductive Layer]

A formation area of the conductive layer may be the whole or a portion of any surface of the substrate. In a conductive film, it is preferable that a conductive layer having a substantially uniform thickness be formed on substantially the whole of a surface or another surface of a film substrate. When the conductive layer is formed on only a portion of the surface of the substrate, for example, the conductive layer may have a fine conductive pattern of a circuit, an electrode, or the like, or a region where the conductive layer is formed and a region where the conductive layer is not formed may be on the same surface and may merely be roughly separated.

The average thickness of the conductive layer is, for example, preferably 10 nm or more and 100 µm or less, more preferably 20 nm or more and 50 µm or less, and still more preferably 30 nm or more and 30 µm or less. When the average thickness of the conductive layer is equal to or more than the lower limit value, high conductivity can be exhibited. When it is equal to or less than the upper limit value, the adhesion of the conductive layer to the substrate is further improved.

The composition of a component contained in the conductive layer is reflected by the composition of the applied conductive composite dispersion liquid. The content of the sugar alcohol is, for example, preferably 1 part by mass or more and 50 parts by mass or less, more preferably 5 parts by mass or more and 40 parts by mass or less, and still more preferably 10 parts by mass or more and 30 parts by mass or less, with respect to 100 parts by mass of the conductive composite (a total of the π-conjugated conductive polymer and the polyanion) in the conductive layer. When the content falls within the above-mentioned range, the conductivity of the conductive layer is satisfactory.

The content of PVP is, for example, preferably 0.01 parts by mass or more and 50 parts by mass or less, more preferably 0.10 parts by mass or more and 30 parts by mass or less, and still more preferably 0.30 parts by mass or more and 20 parts by mass or less, with respect to 100 parts by mass of the conductive composite (a total of the π-conjugated conductive polymer and the polyanion) in the conductive layer. When the content falls within the above-mentioned range, the conductivity of the conductive layer is satisfactory.

### [Substrate]

The substrate may be a substrate formed from an insulating material, or a substrate formed from a conductive material. The shape of the substrate is not particularly limited, and, for example, includes a shape in which a plane is main, such as a film or a substrate.

Examples of the insulating material include glass, synthetic resin, and ceramics.

Examples of the conductive material include a metal, a conductive metal oxide, and carbon.

### (Film Substrate)

When a film substrate is used as the substrate, a conductive multilayer body becomes a conductive film.

Examples of the film substrate include a plastic film formed from synthetic resin. Examples of the synthetic resin include an ethylene-methyl methacrylate copolymer resin, an ethylene-vinyl acetate copolymer resin, polyethylene, polypropylene, polystyrene, polyvinyl chloride, polyvinyl alcohol, polyethylene terephthalate, polybutylene terephthalate, polyethylene naphthalate, polyacrylate, polycarbonate, polyvinylidene fluoride, polyarylate, a styrene-based elastomer, a polyester-based elastomer, polyethersulfone, polyetherimide, polyether ether ketone, polyphenylene sulfide, polyimide, cellulose triacetate, and cellulose acetate propionate.

From the viewpoint of enhancing the adhesion of the film substrate to the conductive layer, the synthetic resin for the film substrate is preferably a polyester resin, and particularly preferably polyethylene terephthalate.

The synthetic resin for the film substrate may be amorphous or crystalline.

The film substrate may be unstretched or stretched.

In order to further improve the adhesion of the conductive layer, the film substrate may be subjected to surface treatment, such as corona discharge treatment, plasma treatment, or flame treatment.

The average thickness of the film substrate is preferably 5 µm or more and 500 µm or less, and more preferably 20 µm or more and 200 µm or less. When the average thickness of the film substrate is equal to or more than the lower limit value, the film substrate is less liable to rupture. When it is equal to or less than the upper limit value, flexibility sufficient for a film can be secured.

The average thickness of the film substrate is a value obtained by measuring the thickness of the film substrate at ten randomly selected positions and averaging the measured values.

### (Glass Substrate)

Examples of a glass substrate include an alkali-free glass substrate, a soda-line glass substrate, a borosilicate glass substrate, and a quartz glass substrate. When the substrate contains an alkali component, the conductivity of the conductive layer tends to reduce. Therefore, alkali-free glass is preferred among the glass substrates. Here, alkali-free glass represents a glass composition in which the content of an alkali component is 0.1 mass% or less with respect to the whole mass of the glass composition.

The average thickness of the glass substrate is preferably 100 µm or more and 3,000 µm or less, and more preferably 100 µm or more and 1,000 µm or less. When the average thickness of the glass substrate is equal to or more than the lower limit value, the glass substrate is less liable to be broken. When it is equal to or less than the upper limit value, the glass substrate can contribute to thinning of the conductive multilayer body.

The average thickness of the glass substrate is a value obtained by measuring the thickness of the film substrate at ten randomly selected positions and averaging the measured values.

### Examples

### (Production Example 1) Production of Polystyrenesulfonic Acid

206 g of sodium styrenesulfonate was dissolved in 1,000 mL of ion-exchange water, a solution in which 1.14 g of ammonium persulfate as an oxidant was dissolved in 10 mL of water in advance was added dropwise for 20 minutes with stirring at 80°C, and the solution was stirred for 12 hours.

To the resultant sodium polystyrenesulfonate solution, 1,000 mL of sulfuric acid diluted to 10 mass% was added, and approximately 1,000 mL of the solvent in the resultant sodium polystyrenesulfonate solution was removed by ultrafiltration. Next, 2,000 mL of ion-exchanged water was added to the residue, approximately 2,000 mL of the solvent was removed by ultrafiltration, and polystyrenesulfonic acid was washed with water. This water-washing operation was repeated three times.

Water in the resultant solution was removed under reduced pressure to obtain solid colorless polystyrenesulfonic acid (PSS).

### (Production Example 2) Production of PEDOT-PSS Aqueous Dispersion Liquid

14.2 g of 3,4-ethylenedioxythiophene and a solution in which 36.7 g of polystyrenesulfonic acid was dissolved in 2,000 mL of ion-exchanged water were mixed at 20°C.

While the resultant mixed solution was held at 20°C and stirred, an oxidation catalyst solution in which 29.64 g of ammonium persulfate and 8.0 g of ferric sulfate were dissolved in 200 mL of ion-exchange water was slowly added and stirred for 3 hours, resulting in a reaction.

2,000 mL of ion-exchanged water was added to the resultant reaction liquid, and approximately 2,000 mL of the solvent was removed by ultrafiltration. This operation was repeated three times.

Next, 200 mL of sulfuric acid diluted to 10 mass% and 2,000 mL of ion-exchanged water were added to the resultant solution, and approximately 2,000 mL of the solvent was removed by ultrafiltration. 2,000 mL of ion-exchanged water was added to the residue, and approximately 2,000 mL of the solution was removed by ultrafiltration. This operation was repeated three times.

Subsequently, 2,000 mL of ion-exchanged water was added to the resultant solution, and approximately 2,000 mL of the solvent was removed by ultrafiltration. This operation was repeated five times to obtain a 1.2 mass% solution of poly(3,4-ethylenedioxythiophene) doped with polystyrenesulfonic acid (PEDOT-PSS aqueous dispersion liquid). The solution was then subjected to further ultrafiltration to obtain a 1.6 mass% PEDOT-PSS aqueous dispersion liquid.

### (Production Example 3)

A 1.2 mass% solution of poly(3,4-ethylenedioxythiophene) doped with polystyrenesulfonic acid (PEDOT-PSS aqueous dispersion liquid) was obtained in the same manner as in Production Example 2. The solution was then subjected to further ultrafiltration to obtain a 2.0 mass% PEDOT-PSS aqueous dispersion liquid.

### (Production Example 4) Preparation of Element for Capacitor

An anode lead terminal was connected to an etched aluminum foil (anode foil), a voltage of 40 V was then applied in a 10 mass% ammonium adipate aqueous solution, and chemical treatment (oxidation) was performed to form a dielectric layer on both surfaces of the aluminum foil. As a result, an anode foil was obtained.

Next, an opposing aluminum cathode foil including a welded cathode lead terminal was layered on both surfaces of the anode foil through a cellulose separator, and this laminate was wound in a cylinder to obtain an element for a capacitor.

### (Production Example 5)

77 g of ethylene glycol, 23 g of polyethylene glycol #300, and 1 g of p-hydroxybenzoic acid were mixed to obtain an electrolyte solution for driving.

### (Example 1)

0.35 g of imidazole, 10 g of diethylene glycol, 10 g of sorbitol, and 0.05 g of polyvinylpyrrolidone (product name: PVP K-90 manufactured by Nippon Shokubai Co., Ltd.) were added to 100 g of the PEDOT-PSS aqueous dispersion liquid (1.6 mass%) obtained in Production Example 2 and stirred for 30 minutes to obtain a conductive composite dispersion liquid (hereinafter referred to as a coating material composition). The coating material composition had a pH of 2.5.

Next, the element for a capacitor obtained in Production Example 4 was dipped in the coating material composition under reduced pressure, and then dried with a hot-air dryer at 125°C for 30 minutes to obtain the element for a capacitor including a solid electrolyte containing a conductive composite on the surface of the dielectric layer.

Finally, an aluminum case was filled with the element for a capacitor having the solid electrolyte layer and the electrolyte solution for driving obtained in Production Example 5 and sealed with a rubber seal, and treatment was then performed at an applied voltage of 40 V and 125°C for 30 minutes to produce a capacitor.

### (Example 2)

0.40 g of imidazole, 10 g of diethylene glycol, 10 g of sorbitol, and 0.01 g of polyvinylpyrrolidone (product name: PVP K-90 manufactured by Nippon Shokubai Co., Ltd.) were added to 100 g of the PEDOT-PSS aqueous dispersion liquid (2.0 mass%) obtained in Production Example 3 and stirred for 30 minutes to obtain a conductive composite dispersion liquid (hereinafter referred to as a coating material composition). The coating material composition had a pH of 2.5.

Next, a capacitor was produced using the coating material composition in the same manner as in Example 1.

### (Example 3)

A capacitor was produced in the same manner as in Example 2 except that the amount of polyvinylpyrrolidone (product name: PVP K-90 manufactured by Nippon Shokubai Co., Ltd.) was changed from 0.01 g to 0.05 g.

### (Example 4)

A capacitor was produced in the same manner as in Example 2 except that the amount of polyvinylpyrrolidone (product name: PVP K-90 manufactured by Nippon Shokubai Co., Ltd.) was changed from 0.01 g to 0.10 g.

### (Example 5)

A capacitor was produced in the same manner as in Example 2 except that the amount of polyvinylpyrrolidone (product name: PVP K-90 manufactured by Nippon Shokubai Co., Ltd.) was changed from 0.01 g to 0.20 g.

### (Example 6)

A capacitor was produced in the same manner as in Example 3 except that sorbitol was changed to mannitol.

### (Example 7)

A capacitor was produced in the same manner as in Example 3 except that sorbitol was changed to erythritol.

### (Example 8)

A capacitor was produced in the same manner as in Example 3 except that 10 g of sorbitol was changed to 5 g of pentaerythritol.

### (Comparison Example 1)

A capacitor was produced in the same manner as in Example 2 except that polyvinylpyrrolidone (product name: PVP K-90 manufactured by Nippon Shokubai Co., Ltd.) was not added.

### (Comparison Example 2)

A capacitor was produced in the same manner as in Example 2 except that 10 g of sorbitol was changed to 10 g of ion-exchanged water.

### (Comparison Example 3)

A capacitor was produced in the same manner as in Example 2 except that the amount of polyvinylpyrrolidone (product name: PVP K-90 manufactured by Nippon Shokubai Co., Ltd.) was changed from 0.01 g to 0.3 g.

### [Measurement of pH]

pH at 25°C was measured with a commercially available pH meter by an ordinary method.

### [Method for Measuring Viscosity]

The conductive composite dispersion liquid (coating material composition) obtained in each of Examples was used as a sample, and the viscosity of the conductive composite dispersion liquid was measured with a tuning fork oscillation viscometer (Model: SV-10, manufactured by A&D Company, Limited) at 25°C in accordance with JIS Z8803:2011 (viscosity determination with oscillation viscometer). Conversion was performed on the basis of 1 Pa·s (pascal seconds) = 1,000 cP (centipoises).

### [Measurement of Equivalent Series Resistance]

For the capacitor produced using the conductive composite dispersion liquid in each of Examples, an electrostatic capacity (unit: µF) at 120 Hz and an equivalent series resistance (ESR) (unit: mΩ) at 100 kHz were measured with an LCR meter ZM2376 (manufactured by NF Corporation). The measurement results of ESR are shown in Table 1.

**[Table 1]**

| | PVP | Sugar alcohol | | Viscosity of conductive complex dispersion liquid [mPa·s] | ESR of capacitor [mΩ] |
|---|---|---|---|---|---|
| | Relative addition amount relative to a total of 100 parts by mass of PEDOT-PSS and water (part by mass) | Kind | Relative addition amount relative to a total of 100 parts by mass of PEDOT-PSS and water (part by mass) | | |
| Example 1 | 0.05 | Sorbitol | 10 | 30 | 10.0 |
| Example 2 | 0.01 | Sorbitol | 10 | 32 | 8.0 |
| Example 3 | 0.05 | Sorbitol | 10 | 37 | 8.5 |
| Example 4 | 0.1 | Sorbitol | 10 | 40 | 9.1 |
| Example 5 | 0.2 | Sorbitol | 10 | 46 | 10.1 |
| Example 6 | 0.05 | Mannitol | 10 | 41 | 8.7 |
| Example 7 | 0.05 | Erythrito 1 | 10 | 44 | 8.4 |
| Example 8 | 0.05 | Pentaerythritol | 10 | 39 | 8.5 |
| Comparative Example 1 | 0 | Sorbitol | 10 | 17 | 11.0 |
| Comparative Example 2 | 0.01 | None | 0 | 28 | 10.4 |
| Comparative Example 3 | 0.3 | Sorbitol | 10 | 51 | 12.7 |

As described above, PVP was added and the conductive composite dispersion liquids produced in Examples according to the present invention contained a specific sugar alcohol, and hence an increase in viscosity was low. The capacitors produced using the conductive composite dispersion liquids had low ESR and high performance.

Meanwhile, the conductive composite dispersion liquid of Comparative Example 1 did not contain PVP, and hence the viscosity was low, the ESR of the capacitor was high, and the performance was low. It was considered that a cause was that the conductivity of the solid electrolyte layer in Comparative Example 1 was low.

The conductive composite dispersion liquid of Comparative Example 2 contained PVP and did not contain a specific sugar alcohol, and hence the viscosity was higher than Comparative Example 1, the ESR of the capacitor was higher than Examples, and the performance was low.

The conductive composite dispersion liquid of Comparative Example 3 contained PVP and a specific sugar alcohol, but had a viscosity of more than 50 mPa·s, and hence the ESR of the capacitor was high and the performance was low.

### Reference Signs List

- 10: capacitor
- 11: anode
- 12: dielectric layer
- 13: cathode
- 14: solid electrolyte layer

## Claims

1. A conductive composite dispersion liquid comprising a conductive composite containing a π-conjugated conductive polymer and a polyanion, water, a sugar alcohol having 4 to 7 carbon atoms and 3 to 7 hydroxy groups in a molecule, and polyvinylpyrrolidone, the conductive composite dispersion liquid having a viscosity at 25°C of less than 50 mPa·s.

2. The conductive composite dispersion liquid according to claim 1, wherein a content of the polyvinylpyrrolidone is 0.01 parts by mass or more and less than 0.30 parts by mass with respect to a total of 100 parts by mass of the conductive composite and the water.

3. The conductive composite dispersion liquid according to claim 2, wherein a content of the conductive composite is 0.1 parts by mass or more and 3.0 parts by mass or less with respect to a total of 100 parts by mass of the conductive composite and the water.

4. The conductive composite dispersion liquid according to claim 3, wherein a content of the water is 70 mass% or more and 99 mass% or less with respect to a whole mass of the conductive composite dispersion liquid.

5. The conductive composite dispersion liquid according to claim 4, wherein the sugar alcohol contains at least one of sorbitol, mannitol, erythritol, and pentaerythritol.

6. The conductive composite dispersion liquid according to claim 5, further comprising an organic solvent having a boiling point at 1 atm of 150°C or more.

7. The conductive composite dispersion liquid according to claim 6, further comprising a neutralizer.

8. The conductive composite dispersion liquid according to claim 5, wherein
the π-conjugated conductive polymer is poly(3,4-ethylenedioxythiophene) or the polyanion is polystyrenesulfonic acid, or
the π-conjugated conductive polymer is poly(3,4-ethylenedioxythiophene) and the polyanion is polystyrenesulfonic acid.

9. A capacitor comprising:
an anode formed from a porous body of a valve metal;
a dielectric layer formed from an oxide of the valve metal;
a cathode formed from a conductive material on a side opposite to the anode; and
a solid electrolyte layer formed between the dielectric layer and the cathode,
wherein the solid electrolyte layer is a cured product of the conductive composite dispersion liquid according to any one of claims 1 to 8.

10. A conductive multilayer body comprising a substrate and a conductive layer formed on a surface of at least a portion of the substrate, wherein the conductive layer is a cured product of the conductive composite dispersion liquid according to any one of claims 1 to 8.

11. A method for producing a conductive composite dispersion liquid, the method comprising a step of mixing a conductive composite containing a π-conjugated conductive polymer and a polyanion, a dispersion medium, and a sugar alcohol having 4 to 7 carbon atoms and 3 to 7 hydroxy groups in a molecule to obtain a conductive composite dispersion liquid having a viscosity at 25°C of less than **50** mPa·s.

12. The method for producing a conductive composite dispersion liquid according to claim 11, wherein a dispersion liquid in which the conductive composite is dispersed in the dispersion medium is obtained and condensed, and the sugar alcohol is mixed.

13. A method for producing a capacitor, the method comprising a step of applying the conductive composite dispersion liquid according to any one of claims 1 to 8 to a surface of a dielectric layer formed on a surface of an anode formed from a porous body of a valve metal and drying the conductive composite dispersion liquid to form a solid electrolyte.

14. A method for producing a conductive multilayer body, the method comprising a step of applying the conductive composite dispersion liquid according to any one of claims 1 to 8 to at least a surface of a substrate and drying the conductive composite dispersion liquid to form a conductive layer.
